# FASCICULE DE BREVET EUROPEEN

(11) **EP 3 752 394 B1**
(45) Date de publication et mention de la délivrance du brevet: **27.12.2023**
(21) Numéro de dépôt: 19700302.3
(22) Date de dépôt: 14.01.2019
(51) Int. Cl.: B60R 25/10, B60R 25/30, B60R 25/01, B60T 7/12

(54) **MÉTHODE DE SURVEILLANCE D'UN ENVIRONNEMENT DE VÉHICULE AUTOMOBILE EN STATIONNEMENT COMPRENANT UNE CAMÉRA ASYNCHRONE**
VERFAHREN ZUR ÜBERWACHUNG EINER UMGEBUNG EINES GEPARKTEN KRAFTFAHRZEUGS MIT EINER ASYNCHRONEN KAMERA
METHOD FOR MONITORING AN ENVIRONMENT OF A PARKED MOTOR VEHICLE COMPRISING AN ASYNCHRONOUS CAMERA

(30) Priorité: 16.02.2018 FR 1851322
(43) Date de publication de la demande: 23.12.2020
(73) Titulaire: Renault s.a.s, 92100 Boulogne Billancourt (FR)
(72) Inventeur: FLORIMOND, Charles, 78340 LES CLAYES SOUS BOIS (FR)
(74) Mandataire: Renault Group
(86) Numéro de dépôt international: PCT/EP2019/050754
(87) Numéro de publication internationale: WO 2019/158287

(56) Documents cités:
- WO-A1-2004/071815
- WO-A1-2017/105913
- WO-A2-2009/104215
- JP-A- 2005 039 705
- JP-A- 2009 141 456

## Description

L'invention concerne le domaine des véhicules automobiles, en particulier la surveillance de l'environnement du véhicule, lorsque le véhicule est stationné, son moteur à l'arrêt.

L'invention concerne une méthode de surveillance d'un environnement de véhicule automobile en stationnement. L'invention se rapporte également à un programme d'ordinateur et un support lisible d'informations associé.

WO 2004/071815 divulgue une méthode de surveillance d'un environnement de véhicule automobile en stationnement un système de surveillance comportant une caméra, la méthode de surveillance comprenant les étapes suivantes : - une étape de détection de mouvement dans laquelle le système de surveillance détecte si un objet est mobile dans l'environnement véhicule au moyen d'une détection de mouvement par la caméra.

Il est connu de mettre des caméras synchrones dans les véhicules automobiles dans le domaine de l'aide à la conduite. Une caméra synchrone fonctionne généralement en niveau de gris et son fonctionnement est basé sur la prise régulière de photographies selon une fréquence prédéfinie.

Ces caméras synchrones sont actives en phase de roulage du véhicule mais sont généralement désactivées lorsque le véhicule est stationné. Il n'est pas envisageable de les laisser activées pendant plusieurs jours lorsque le véhicule est stationné car leur consommation électrique est trop importante, la batterie du véhicule se déchargerait très vite et cela ne permettrait pas à l'utilisateur de pouvoir redémarrer le véhicule. Ainsi, il n'est pas possible aujourd'hui de surveiller l'environnement du véhicule par le véhicule lui-même, lorsque le véhicule est stationné pendant plusieurs jours.

L'invention vise à résoudre ce problème en utilisant une caméra asynchrone qui est de manière connue utilisée surtout dans le domaine médical, mais aussi dans les applications industrielles nécessitant une détection de mouvements ultra-rapide.

La caméra asynchrone est une caméra dynamique dont le capteur optique se compose d'une matrice de pixels indépendants les uns des autres. Un mouvement dans le champ de vision de la caméra asynchrone provoque un changement d'intensité sur le ou les pixels correspondants. La consommation de la caméra asynchrone est fonction du nombre de pixels dont l'intensité varie. Ainsi, une caméra asynchrone a une très faible consommation dans un environnement statique.

L'invention utilise cette propriété de faible consommation de la caméra asynchrone pour avantageusement l'appliquer à la surveillance d'un environnement de véhicule automobile en stationnement.

L'invention porte sur une méthode de surveillance d'un environnement de véhicule automobile en stationnement, le véhicule comprenant un moteur, un calculateur et un système de surveillance comportant une caméra asynchrone, la méthode de surveillance comprenant les étapes suivantes :
- une étape de détection de véhicule stationné dans laquelle le système de surveillance détecte que le véhicule est stationné, son moteur étant à l'arrêt,
- une étape de détection de mouvement dans laquelle le système de surveillance détecte si un objet est mobile dans l'environnement véhicule au moyen d'une détection de mouvement par la caméra asynchrone,
- une étape de réveil du calculateur dans laquelle le système de surveillance réveille ledit calculateur.

Selon un aspect de l'invention, la méthode de surveillance comprend en outre une étape d'alerte dans laquelle le système de surveillance envoie un signal d'alerte à un appareil électronique au moyen d'une communication sans fil.

Selon un aspect de l'invention, le calculateur est choisi parmi :
- un calculateur d'éclairage du véhicule,
- un calculateur d'avertisseur sonore,
- un calculateur des ouvrants du véhicule,
- un calculateur d'alarme du véhicule,
- un calculateur de détection d'obstacle,
- un calculateur d'enregistrement vidéo,
- un calculateur d'avertissement de danger,
- un calculateur de géolocalisation du véhicule,
- un calculateur de freinage.

Selon un aspect de l'invention, le véhicule est associé à un badge d'identification, la méthode de surveillance comprend en outre une étape de détection de badge d'identification, ledit calculateur est un calculateur des ouvrants du véhicule.

Selon un aspect de l'invention, la méthode de surveillance comprend en outre une étape de reconnaissance d'un mouvement de l'objet mobile parmi des mouvements prédéfinis.

Selon un aspect de l'invention, la méthode de surveillance comprend en outre une étape de détection d'un signal de demande d'éclairage nocturne, le calculateur est un calculateur d'éclairage du véhicule.

Selon un aspect de l'invention, la méthode de surveillance comprend en outre une étape de détection de demande d'ouverture d'ouvrant, le calculateur est un calculateur d'avertissement de danger.

Selon un aspect de l'invention, le véhicule automobile est stationné sur une surface de stationnement définissant sensiblement un plan de stationnement, une optique de la caméra asynchrone est orientée en direction du plan de stationnement.

Selon un aspect de l'invention, la méthode de surveillance comprend en outre une étape de mise en veille du calculateur dans laquelle le système de surveillance met en veille ledit calculateur après l'écoulement d'une durée prédéterminée de réveil dudit calculateur ou d'une durée prédéterminée de non détection d'objet mobile dans l'environnement véhicule.

Selon un aspect de l'invention, le système de surveillance comprenant en outre une caméra synchrone, l'étape de détection de mouvement comprenant les opérations suivantes :
- une opération de détection de mouvement dans laquelle la caméra asynchrone détecte un mouvement dans l'environnement véhicule,
- une opération d'activation de la caméra synchrone,
- une opération de détermination dans laquelle le système de surveillance détermine si un objet pertinent est mobile dans l'environnement véhicule, en fonction de données d'acquisition de la caméra synchrone et de la caméra asynchrone.

L'invention se rapporte également à un produit programme d'ordinateur comprenant les instructions de programme mettant en oeuvre au moins une étape de la méthode de surveillance, lorsque les instructions de programme sont exécutées par un ordinateur.

L'invention se rapporte également à un support lisible d'informations sur lequel est mémorisé le produit programme d'ordinateur.

D'autres avantages et caractéristiques apparaîtront à la lecture de la description qui suit et de modes de réalisation, donnés à titre d'exemple uniquement et en référence aux dessins qui sont :
- figure 1, une représentation schématique de la méthode de surveillance selon, l'invention,
- figure 2, une représentation schématique d'opérations d'une des étapes de la méthode de surveillance de l'invention dans un mode de réalisation évolué,
- figure 3, une représentation schématique des étapes de la méthode de surveillance dans les cas d'applications de verrouillage ou déverrouillage, d'ouverture ou de fermeture d'ouvrants,
- figure 4, une représentation schématique des étapes de la méthode de surveillance de la figure 3, dans un mode de réalisation basique,
- figure 5, une représentation schématique des étapes de la méthode de surveillance dans le cas d'une application de signalisation du véhicule la nuit,
- figure 6, une représentation schématique des étapes de la méthode de surveillance dans le cas d'une application de sortie de véhicule sécurisée.

L'invention se rapporte à la surveillance de l'environnement d'un véhicule motorisé, typiquement, un véhicule automobile, lorsque le véhicule est stationné, son moteur étant à l'arrêt, en particulier à une méthode de surveillance.

Un véhicule stationné est un véhicule garé, par exemple sur un emplacement de stationnement public ou privé, dans la rue, dans un garage d'une propriété privée, dans un parking public, sur le bas-côté d'une route, le long d'un trottoir ou tout ou en partie sur un trottoir. Un véhicule arrêté à un feu rouge, un stop ou sur une route encombrée n'est pas un véhicule stationné au sens de l'invention, même si son moteur est arrêté. Dans ce cas, le véhicule n'est pas considéré en stationnement.

L'environnement de véhicule tel que défini dans l'invention comprend l'environnement intérieur du véhicule automobile, c'est-à-dire la cabine du véhicule et l'espace de chargement du véhicule, et l'extérieur du véhicule. L'extérieur du véhicule comprend le sol sur lequel le véhicule est stationné, une personne, un véhicule mobile, un animal.

Dans la description qui suit, le véhicule stationné comprenant le dispositif de surveillance est nommé : véhicule ou véhicule de l'invention.

Un véhicule distinct du véhicule de l'invention qui est un objet mobile au sens de l'invention est nommé : véhicule mobile.

L'environnement de véhicule correspond à un champ de vision de la caméra asynchrone d'environ 100 mètres.

Le domaine de la surveillance visé par l'invention comprend :
- la protection du véhicule contre le vandalisme, le vol à l'extérieur du véhicule ou à l'intérieur du véhicule, l'intérieur du véhicule comprenant la cabine et l'espace de chargement du véhicule,
- la protection du véhicule contre les chocs et les accidents,
- la protection des piétons et des véhicules mobiles contre les chocs et les accidents,
- l'aide au conducteur ou au passager comprenant le pilotage des ouvrants du véhicule,
- l'aide au conducteur ou au passager pour l'éclairage de l'environnement du véhicule
- la signalisation d'éclairage du véhicule la nuit,
- l'alerte du propriétaire du véhicule, la constitution de preuves.

Les applications possibles de la méthode de surveillance comprennent :
- le vol à l'intérieur du véhicule,
- la protection préventive de la carrosserie du véhicule,
- la vidéo surveillance,
- le vol du véhicule,
- le verrouillage et le déverrouillage des serrures des ouvrants,
- l'ouverture mécanique des ouvrants,
- l'ouverture et fermeture des ouvrants motorisés,
- l'anti déplacement du véhicule,
- l'anti glissement du véhicule,
- la signalisation du véhicule la nuit,
- la sortie de véhicule sécurisée,
- l'éclairage de l'environnement extérieur du véhicule la nuit.

Le véhicule comprend un moteur, un calculateur et un système de surveillance comportant une caméra asynchrone.

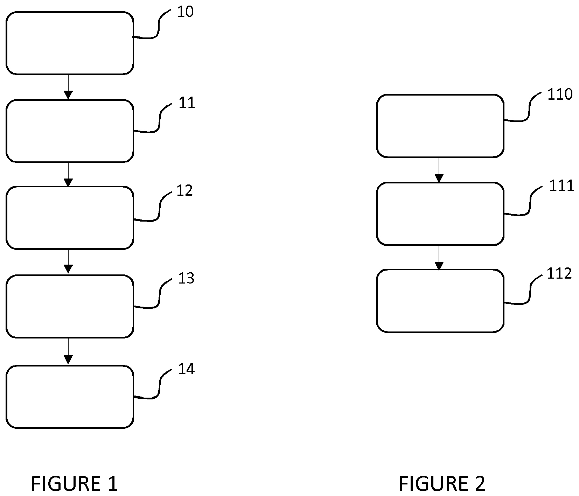

Selon la figure 1, la méthode de surveillance comprend les étapes suivantes :
- une étape de détection de véhicule stationné 10 dans laquelle le système de surveillance détecte que le véhicule est stationné, le moteur étant à l'arrêt,
- une étape de détection de mouvement 11 dans laquelle le système de surveillance détecte si un objet est mobile dans l'environnement véhicule au moyen d'une détection de mouvement par la caméra asynchrone,
- une étape de réveil du calculateur 12 dans laquelle le système de surveillance réveille ledit calculateur,
- une étape d'alerte 13 dans laquelle le système de surveillance envoie un signal d'alerte à un appareil électronique au moyen d'une communication sans fil,
- une étape de mise en veille du calculateur 14 dans laquelle le système de surveillance met en veille ledit calculateur après l'écoulement d'une durée prédéterminée de réveil dudit calculateur ou d'une durée prédéterminée de non détection d'objet mobile dans l'environnement véhicule.

Dans l'étape de détection de véhicule stationné 10, le système de surveillance détecte que le véhicule est stationné, le moteur étant à l'arrêt.

La détection de véhicule stationné, moteur arrêté, peut par exemple être effectué par l'observation de paramètres du véhicule : la vitesse des roues, l'état du moteur, l'état des ouvrants. Cette observation peut être effectuée par un organe d'observation du véhicule qui envoie un signal ou plusieurs signaux au système de surveillance. Par la réception et l'éventuel décodage de ce signal ou de ces signaux, le système de surveillance détecte que le véhicule est stationné et que le moteur du véhicule est à l'arrêt.

Des signaux relatant la vitesse des roues, l'état du moteur ou l'état des ouvrants peuvent provenir d'informations transmises par un réseau de communication véhicule de type LIN, CAN, ou Ethernet.

Le système de surveillance peut également comprendre des moyens aptes à effectuer cette observation de paramètres du véhicule afin de permettre cette détection de véhicule stationné, moteur arrêté.

Après que le système ait détecté que le véhicule est stationné, le moteur étant à l'arrêt, la plupart des organes du véhicule sont en veille. Le calculateur est en veille. Le système de surveillance est actif. La caméra asynchrone est active. Si le véhicule comprend d'autres caméras, elles sont en veille.

Dans l'étape de détection de mouvement 11, le système de surveillance détecte si un objet est mobile dans l'environnement véhicule au moyen d'une détection de mouvement par la caméra asynchrone dont le champ de vision scrute l'environnement véhicule.

L'objet mobile visé par l'invention peut comprendre un véhicule mobile, un animal, un individu, le geste d'un individu, le sol sur lequel le véhicule est stationné.

Dans un premier mode de réalisation, dit mode de réalisation basique, la détection de mouvement est réalisée par la caméra asynchrone seule, c'est-à-dire non associée à un appareil optique d'un autre type, par exemple une caméra synchrone.

La caméra asynchrone détecte un mouvement lorsqu'un ou plusieurs des pixels de l'image changent d'intensité.

La caméra asynchrone peut comprendre un circuit électronique comprenant un filtre de traitement des images. Ce filtre de traitement permet notamment d'éviter les fausses détections de mouvement dans le cas d'un objet mobile non pertinent ou dans le cas d'objets à trop grande distance, et donc non pertinents pour l'application visée.

Dans un deuxième mode de réalisation, dit mode de réalisation évolué, le système de surveillance comprend en outre une caméra synchrone. Ce mode est représenté sur la figure 2 et est détaillée plus loin dans la description.

Dans l'étape de réveil du calculateur 12, le système de surveillance réveille ledit calculateur.

Le calculateur qui est réveillé dans l'étape de réveil du calculateur 12, est choisi parmi un calculateur ou une combinaison de calculateurs de la liste suivante :
- un calculateur d'éclairage du véhicule,
- un calculateur d'avertisseur sonore,
- un calculateur des ouvrants du véhicule,
- un calculateur d'alarme du véhicule,
- un calculateur de détection d'obstacles,
- un calculateur d'enregistrement vidéo,
- un calculateur d'avertissement de danger,
- un calculateur de géolocalisation du véhicule,
- un calculateur de freinage.

Le réveil du calculateur d'éclairage du véhicule active un ou plusieurs des éclairages du véhicule tels que les feux de route, les feux de croisement, les feux de position, les feux stop, les feux clignotants ou l'éclairage intérieur du véhicule.

Le réveil du calculateur d'avertisseur sonore active un avertisseur sonore du véhicule audible depuis l'extérieur du véhicule, par exemple le klaxon du véhicule.

Le réveil du calculateur des ouvrants du véhicule active l'une des fonctions suivantes :
- le verrouillage ou le déverrouillage des serrures d'ouvrants,
- l'ouverture d'ouvrants mécaniques, la manoeuvre d'ouverture étant réalisée ensuite par un système mécanique élastique, par exemple un ressort,
- l'ouverture ou la fermeture d'ouvrants motorisés du véhicule.

Les ouvrants du véhicule comprennent les portières, le capot, le coffre, le hayon, la trappe à carburant, la trappe de charge d'un véhicule électrique ou hybride, le toit ouvrant du véhicule, le toit d'un cabriolet.

Le réveil du calculateur d'alarme du véhicule active une alarme véhicule, permettant ainsi de dissuader un individu de voler ou de vandaliser le véhicule. L'alarme du véhicule peut être sonore ou lumineuse. L'alarme du véhicule peut être couplée à un envoi de message notamment un message texte ou vidéo sur un téléphone portable, par exemple au propriétaire du véhicule, au conducteur habituel du véhicule ou à une société de surveillance.

Le réveil du calculateur de détection d'obstacles active des capteurs utilisés notamment pour les aides au stationnement, en particulier les capteurs ultrason. L'activation des capteurs peut concerner par exemple tous les capteurs ultrason localisés à l'arrière ou à l'avant du véhicule ou sur les côtés du véhicule selon l'emplacement de l'objet mobile dans l'environnement véhicule. La détection d'obstacles peut être couplée à l'émission d'un signal sonore ou lumineux.

Le réveil du calculateur d'enregistrement vidéo active un enregistrement vidéo par exemple au moyen d'une caméra synchrone.

Le réveil du calculateur d'avertissement de danger active l'émission d'un signal qui peut être :
- un signal lumineux, par exemple sur le tableau de bord du véhicule ou sur un ouvrant du véhicule,
- un signal sonore identifiable par l'utilisateur du véhicule comme étant un signal prévenant d'un potentiel danger,
- un signal d'alerte à un appareil électronique au moyen d'une communication sans fil.

Le réveil du calculateur de géolocalisation du véhicule active le géolocalisateur du véhicule, permettant d'identifier les coordonnées du véhicule par exemple par sa latitude et sa longitude.

Le réveil du calculateur de freinage active le frein de parking du véhicule, permettant de serrer ou resserrer le frein de parking automatique du véhicule.

L'étape d'alerte 13 est facultative. Le système de surveillance envoie un signal d'alerte à un appareil électronique au moyen d'une communication sans fil. Par exemple le système de surveillance envoie un message texte ou vidéo sur le téléphone portable du propriétaire du véhicule ou à une société de surveillance. Les coordonnées, telles que la latitude et la longitude du véhicule, peuvent aussi être envoyées.

Dans l'étape de mise en veille du calculateur 14, le système de surveillance met en veille ledit calculateur après l'écoulement d'une durée prédéterminée de réveil dudit calculateur ou d'une durée prédéterminée de non détection d'objet mobile dans l'environnement véhicule. Cela permet de ne pas décharger trop rapidement la batterie du véhicule.

De manière préférentielle, la méthode de surveillance se poursuit ensuite par un retour à l'étape de détection de mouvement 11.

L'ordre de séquencement des étapes 10 à 14 est de préférence celui indiqué sur la figure 1. Néanmoins, l'étape d'alerte 13 peut être positionnée après l'étape de détection de mouvement 11 ou l'étape de réveil du calculateur 12 ou simultanée à l'une desdites étapes 11, 12.

Selon la figure 2, dans le mode de réalisation évolué, l'étape de détection de mouvement 11 comprend les opérations suivantes :
- une opération de détection de mouvement 110 dans laquelle la caméra asynchrone détecte un mouvement dans l'environnement véhicule,
- une opération d'activation de la caméra synchrone 111,
- une opération de détermination 112 dans laquelle le système de surveillance détermine si un objet pertinent est mobile dans l'environnement véhicule, en fonction de données d'acquisition de la caméra synchrone et de la caméra asynchrone.

Dans l'opération de détection de mouvement 110, la caméra asynchrone détecte un mouvement dans l'environnement véhicule.

La caméra asynchrone détecte un mouvement lorsqu'un ou plusieurs des pixels de l'image de la caméra asynchrone changent d'intensité.

Ensuite, dans l'opération d'activation de la caméra synchrone 111, la caméra asynchrone active la caméra synchrone. Cette étape permet de ne pas laisser active la caméra synchrone pendant toute la durée de stationnement du véhicule afin d'éviter de décharger la batterie du véhicule. Lorsque la caméra synchrone est active, elle enregistre des images ou des données sur ces images.

C'est finalement pendant l'opération de détermination 112, dans laquelle le système de surveillance compile et traite les données d'acquisition des caméras synchrone et asynchrone, qu'est déterminé si un objet pertinent est mobile au sens de l'invention. Si un objet pertinent mobile est détecté, l'étape de réveil du calculateur 12 est exécutée.

Pendant l'opération de détermination 112, le système de surveillance peut notamment déterminer :
- la nature d'un objet mobile, par exemple un véhicule mobile, un animal, un individu, le geste d'un individu, le sol sur lequel le véhicule est stationné,
- le mouvement de l'objet mobile, par exemple parmi des mouvements prédéfinis,
- la distance de l'objet mobile par rapport au véhicule.

En fonction de la nature de l'objet mobile et/ou de son mouvement et/ou de sa vitesse et/ou de sa distance au véhicule, le système de surveillance détermine si l'objet mobile est pertinent.

Les critères pour la détermination d'objet pertinent sont variables selon les applications.

Un mouvement prédéfini correspond à une direction d'un mouvement et/ou un sens d'un mouvement et/ou une vitesse d'un mouvement.

Pour certaines applications, l'optique de la caméra asynchrone est dirigée vers l'intérieur du véhicule, notamment la cabine et/ou l'espace de chargement, afin de surveiller la cabine du véhicule et/ou l'espace de chargement.

Pour d'autres applications, l'optique de la caméra asynchrone est dirigée vers l'environnement extérieur du véhicule, c'est-à-dire l'environnement routier ou l'environnement d'un parking, d'un garage.

La caméra asynchrone peut être localisée à l'avant du véhicule ou à l'arrière du véhicule. Elle peut être intégrée ou non derrière les vitrages.

La caméra asynchrone peut également être localisée sur les rétroviseurs extérieurs ou les ouvrants latéraux.

La caméra asynchrone peut également être localisée simultanément en plusieurs endroits du véhicule. Dans ce cas, la caméra asynchrone est assimilée à un système de plusieurs appareils optiques asynchrones localisés en différents endroits du véhicule.

Dans le cas d'une application contre le vol à l'intérieur du véhicule, l'objet mobile est un individu détecté au sein de la cabine véhicule et/ou au sein de l'espace de chargement du véhicule.

L'optique de la caméra asynchrone est dirigée vers l'intérieur du véhicule pour la surveillance de la cabine véhicule et/ou de l'espace de chargement.

Le calculateur qui est réveillé lors de l'étape de réveil du calculateur 12 est un calculateur d'alarme du véhicule et/ou un calculateur d'enregistrement vidéo et/ou un calculateur de géolocalisation du véhicule.

Dans le cas d'une application de protection préventive de la carrosserie du véhicule, l'objet mobile est un véhicule mobile qui manoeuvre dans l'environnement du véhicule de l'invention, en particulier pour se garer autour du véhicule de l'invention.

L'optique de la caméra asynchrone est dirigée vers l'environnement extérieur afin de surveiller l'environnement extérieur du véhicule. La caméra asynchrone peut comprendre plusieurs appareils optiques asynchrones localisés en différents endroits du véhicule, par exemple un appareil ayant son optique dirigée vers l'avant du véhicule et un autre appareil dont l'optique est dirigée vers l'arrière du véhicule.

Le calculateur qui est réveillé lors de l'étape de réveil du calculateur 12 est un calculateur d'éclairage du véhicule et/ou un calculateur d'avertisseur sonore et/ou un calculateur de détection d'obstacles.

Cela permet au conducteur du véhicule mobile d'être averti en cas de distance faible par rapport au véhicule et/ou d'avoir une meilleure visibilité pour effectuer sa manoeuvre et/ou de bénéficier de la mesure de distance par des capteurs ultrasons du véhicule de l'invention pour évaluer la distance entre le véhicule de l'invention et le véhicule mobile. L'information de distance peut être communiquée au véhicule mobile par une fréquence d'éclairage augmentant, puis devenant fixe en-dessous d'une certaine distance. Le véhicule mobile bénéficie ainsi de la mesure de distance même dans le cas où son véhicule n'est pas équipé de capteurs ultrasons. L'information de distance peut être communiquée au véhicule mobile par l'allumage des feux de direction. Le conducteur du véhicule mobile bénéficie ainsi de l'éclairage du véhicule de l'invention pour effectuer sa manoeuvre.

Dans le cas d'une application de vidéo surveillance, l'objet mobile peut-être de n'importe quelle nature.

L'optique de la caméra asynchrone est dirigée vers l'environnement extérieur afin de surveiller l'environnement extérieur du véhicule.

Le calculateur qui est réveillé lors de l'étape de réveil du calculateur 12 est un calculateur d'enregistrement vidéo.

Dans le cas d'une application contre le vol du véhicule, l'objet mobile est le sol sur lequel le véhicule stationné. En effet, dans le référentiel du véhicule et donc du système de surveillance, un déplacement du véhicule par levage ou remorquage, correspond à une détection de mouvement du sol.

Le véhicule automobile est stationné sur une surface de stationnement définissant sensiblement un plan de stationnement. L'optique de la caméra asynchrone est avantageusement orientée en direction du plan de stationnement et dirigée vers l'extérieur du véhicule.

Le véhicule pendant son déplacement est toujours considéré comme stationné au sens de l'invention. C'est sa surface de stationnement qui se déplace. Le mouvement entre le véhicule et le sol est un mouvement relatif.

Le calculateur qui est réveillé lors de l'étape de réveil du calculateur 12 est un calculateur d'enregistrement vidéo et/ou un calculateur de géolocalisation du véhicule et/ou un calculateur d'alarme du véhicule.

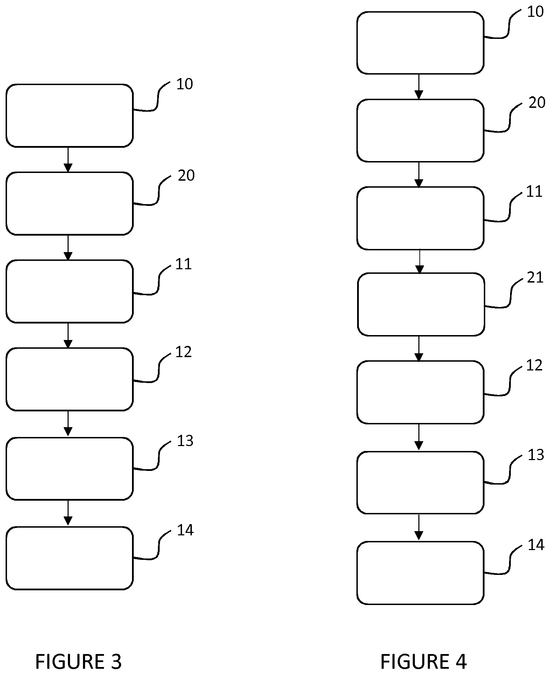

Dans le cas d'applications de verrouillage et déverrouillage des serrures des ouvrants, d'ouverture mécanique des ouvrants, d'ouverture et fermeture motorisées des ouvrants, le véhicule est associé à un badge d'identification et la méthode de surveillance comprend en outre une étape de détection de badge d'identification 20, comme illustré sur la figure 3.

L'étape de détection de badge d'identification 20 est par exemple la réception par le système de surveillance d'une information transmise par un réseau de communication de type LIN, CAN ou Ethernet.

L'optique de la caméra asynchrone est dirigée vers l'environnement extérieur du véhicule.

L'objet mobile est par exemple la main d'un individu, localisée à proximité d'un ouvrant du véhicule, l'individu étant le porteur du badge d'identification associé au véhicule.

L'objet mobile peut-être le geste d'un individu.

Dans le mode de réalisation évolué, la reconnaissance du geste d'un individu peut être effectué pendant l'opération de détermination 112 de l'étape de détection de mouvement 11, selon la figure 3 combinée avec la figure 2.

Dans le mode de réalisation basique, la méthode de surveillance comprend en outre une étape de reconnaissance d'un mouvement de l'objet mobile 21 parmi des mouvements prédéfinis, comme illustré figure 4.

Un mouvement prédéfini correspond à une direction d'un mouvement et/ou un sens d'un mouvement et/ou une vitesse d'un mouvement.

Le calculateur qui est réveillé lors de l'étape de réveil du calculateur 12 est un calculateur des ouvrants du véhicule.

Dans l'application de verrouillage et déverrouillage des serrures des ouvrants, le réveil du calculateur active le verrouillage ou le déverrouillage d'un ou plusieurs ouvrants du véhicule.

Dans l'application d'ouverture mécanique des ouvrants, le réveil du calculateur active l'ouverture d'un ou plusieurs ouvrants du véhicule.

Dans l'application d'ouverture et de fermeture motorisées des ouvrants, le réveil du calculateur active l'ouverture ou la fermeture d'un ou plusieurs ouvrants motorisés du véhicule.

Les ouvrants de véhicule comprennent les portières, le capot, le coffre, le hayon, la trappe à carburant, la trappe de charge d'un véhicule électrique ou hybride, le toit ouvrant du véhicule, le toit d'un cabriolet.

Dans le cas d'une application anti déplacement du véhicule, l'objet mobile est le sol sur lequel le véhicule stationné. En effet, dans le référentiel du véhicule et donc du système de surveillance, un déplacement du véhicule correspond à une détection de mouvement du sol, par exemple à cause d'un frein de parking mal serré ou d'un véhicule mobile poussant le véhicule stationné.

Le véhicule automobile est stationné sur une surface de stationnement définissant sensiblement un plan de stationnement. L'optique de la caméra asynchrone est avantageusement orientée en direction du plan de stationnement et dirigée vers l'extérieur du véhicule.

Le véhicule pendant son déplacement est toujours considéré comme stationné au sens de l'invention. C'est sa surface de stationnement qui se déplace.

Le calculateur qui est réveillé lors de l'étape de réveil du calculateur 12 est un calculateur de freinage.

Cette application se distingue par exemple de l'application contre le vol du véhicule en ce que aucun autre objet mobile n'est au contact du véhicule, notamment un individu ou un bras de levage pour véhicule.

Dans le cas d'une application anti glissement du véhicule, l'objet mobile est le sol sur lequel le véhicule stationné. En effet, dans le référentiel du véhicule et donc du système de surveillance, un déplacement du véhicule, par exemple à cause d'un glissement simultané des quatre roues sur une plaque de verglas, correspond à une détection de mouvement du sol.

Le véhicule automobile est stationné sur une surface de stationnement définissant sensiblement un plan de stationnement. L'optique de la caméra asynchrone est avantageusement orientée en direction du plan de stationnement et dirigée vers l'extérieur du véhicule.

Le véhicule pendant son déplacement est toujours considéré comme stationné au sens de l'invention. C'est sa surface de stationnement qui se déplace.

Le calculateur qui est réveillé lors de l'étape de réveil du calculateur 12 est un calculateur d'avertissement de danger.

Cette application se distingue par exemple de l'application contre le vol du véhicule en ce qu'aucun autre objet mobile n'est au contact du véhicule, notamment un individu ou un bras de levage pour véhicule.

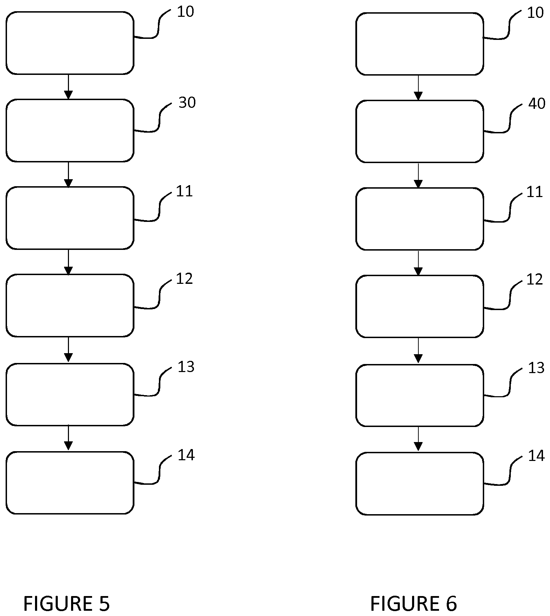

Dans le cas d'une application de signalisation du véhicule la nuit, la méthode de surveillance comprend en outre une étape de détection d'un signal de demande d'éclairage nocturne 30, comme illustré sur la figure 5.

Dans l'étape de détection d'un signal de demande d'éclairage nocturne 30, le système de surveillance détecte la demande d'éclairage nocturne par un utilisateur du véhicule, par exemple par l'activation d'une commande mécanique ou électronique.

L'optique de la caméra asynchrone est dirigée vers l'environnement extérieur du véhicule.

L'objet mobile est par exemple un véhicule mobile circulant sur une route sur laquelle ou près de laquelle le véhicule de l'invention est stationné.

Le calculateur qui est réveillé lors de l'étape de réveil du calculateur 12 est un calculateur d'éclairage du véhicule.

Ainsi, le véhicule de l'invention stationné près d'une route de campagne, active par exemple ses feux de position localisés du côté de la route, sur détection de l'approche d'un véhicule mobile circulant sur une route adjacente à sa surface de stationnement. Le véhicule de l'invention indique sa présence uniquement lorsque cela est nécessaire.

Dans le cas d'une application de sortie de véhicule sécurisé, la méthode de surveillance comprend en outre une étape de détection de demande d'ouverture d'ouvrant 40, comme illustré figure 6.

Lors de l'étape de détection de demande d'ouverture d'ouvrant 40, le système de surveillance détecte qu'un individu localisé dans la cabine du véhicule demande l'ouverture d'un ouvrant, par exemple par la position de sa main sur la poignée associée audit ouvrant, par l'appui sur un bouton de commande, par l'actionnement de la poignée dudit ouvrant, par un geste reconnu par le système de surveillance comme étant demande d'ouverture d'ouvrant.

L'optique de la caméra asynchrone est dirigée vers l'environnement extérieur du véhicule.

Le calculateur qui est réveillé lors de l'étape de réveil du calculateur 12 est un calculateur d'avertissement de danger.

Par exemple, un conducteur venant de garer sa voiture et s'apprêtant à en sortir par la portière côté conducteur, est prévenu du risque de collision avec un véhicule mobile ou un cycliste ou un piéton s'il ouvre sa portière.

Dans le cas d'une application d'éclairage de l'environnement extérieur du véhicule la nuit, l'objet mobile est un individu.

L'optique de la caméra asynchrone est dirigée vers l'environnement extérieur du véhicule.

L'objet mobile est par exemple le conducteur circulant devant le véhicule de l'invention qui est stationné.

Le calculateur qui est réveillé lors de l'étape de réveil du calculateur 12 est un calculateur d'éclairage du véhicule.

Ainsi, le véhicule de l'invention stationné, active par exemple ses feux de croisement, sur détection de l'éloignement ou de l'approche du conducteur.

Pour toutes les applications, notamment les applications listées ci-dessus, le système de surveillance peut, dans le mode de réalisation basique, réveiller un calculateur sans reconnaissance préalable de la nature de l'objet mobile. La seule détection d'objet mobile dans l'environnement du véhicule est suffisante.

Pour toutes les applications, notamment les applications listées ci-dessus, le réveil du calculateur peut être effectué sous condition de la reconnaissance d'un objet mobile pertinent, notamment de la reconnaissance du type d'objet par la caméra synchrone et la caméra asynchrone. Cela correspond au mode de réalisation évolué.

Un filtre de traitement d'image peut aussi être utilisé. Par exemple, dans le cas d'applications de verrouillage et déverrouillage des ouvrants, d'ouverture mécanique des ouvrants, d'ouverture et fermeture motorisées des ouvrants, un objet mobile à une distance de plus d'un mètre de la caméra asynchrone ne sera pas considéré comme pertinent pour le réveil du calculateur des ouvrants du véhicule. Ledit objet ne sera donc pas considéré comme un objet mobile ou objet pertinent mobile au sens de l'invention.

Pour toutes les applications, notamment les applications listées ci-dessus, la méthode de surveillance peut comprendre une étape d'alerte 13 dans laquelle le système de surveillance envoie un signal d'alerte à un appareil électronique au moyen d'une communication sans fil, par exemple un message texte ou vidéo sur le téléphone portable du propriétaire du véhicule, du conducteur du véhicule, d'un passager du véhicule ou à une société de surveillance. Suite à la réception de cette alerte, d'autres actions peuvent suivre, telles qu'une visualisation de la scène et/ou un enregistrement de la scène.

Le système de surveillance peut comprendre un produit programme d'ordinateur comprenant les instructions de programme mettant en oeuvre une ou plusieurs méthodes de surveillance quelle que soit l'application.

Le système de surveillance peut comprendre plusieurs produits programmes d'ordinateur comprenant chacun les instructions de programme mettant en oeuvre une ou plusieurs méthodes de surveillance pour réaliser au moins l'une des applications.

Le véhicule peut comprendre plusieurs systèmes de surveillance et plusieurs calculateurs au sens de l'invention.

Le calculateur du véhicule est relié au système de surveillance par un système communication, par exemple un réseau de communication véhicule de type LIN, CAN, Ethernet.

Le système de surveillance est apte à recevoir, traiter et envoyer des signaux de communication au calculateur

La caméra asynchrone peut comprendre un module électronique permettant de traiter les données concernant la détection d'objet mobile, tels que la reconnaissance de mouvement d'un objet mobile, la détection d'un mouvement d'un objet mobile, la détermination de pertinence d'un objet mobile. Le module électronique peut-être déporté sur une carte électronique non intégrée à la caméra asynchrone. Dans ce cas, le système de surveillance comprend au moins une caméra synchrone et un module électronique.

Lorsque le système de surveillance comprend une caméra synchrone, la caméra synchrone et la caméra asynchrone peuvent être connectées directement par un réseau de communication ou bien par l'intermédiaire d'un module électronique distinct. Le module électronique distinct permet de traitement des données concernant la détection d'objet mobile, tels que la reconnaissance de mouvement d'un objet mobile, la détection d'un mouvement d'un objet mobile, la détermination de pertinence d'un objet mobile

Un système de communication peut être filaire et/ou imprimé sur un circuit imprimé.

Un calculateur en veille est un calculateur dont la consommation électrique est minimale. Le calculateur n'est pas apte à activer ses principales fonctionnalités mais est apte à détecter un signal de réveil permettant de le réveiller.

Un calculateur réveillé est apte à activer ses principales fonctionnalités, par exemple allumer des feux de position dans le cas d'un calculateur d'éclairage.

## Revendications

1. Méthode de surveillance d'un environnement de véhicule automobile en stationnement, le véhicule comprenant un moteur, un calculateur et un système de surveillance comportant une caméra asynchrone, la méthode de surveillance comprenant les étapes suivantes :
- une étape de détection de véhicule stationné (10) dans laquelle le système de surveillance détecte que le véhicule est stationné, le moteur étant à l'arrêt,
- une étape de détection de mouvement (11) dans laquelle le système de surveillance détecte si un objet est mobile dans l'environnement véhicule au moyen d'une détection de mouvement par la caméra asynchrone,
- une étape de réveil du calculateur (12) dans laquelle le système de surveillance réveille ledit calculateur.

2. Méthode de surveillance selon la revendication 1, comprenant en outre une étape d'alerte (13) dans laquelle le système de surveillance envoie un signal d'alerte à un appareil électronique au moyen d'une communication sans fil.

3. Méthode de surveillance selon l'une quelconque des revendications 1 ou 2, dans laquelle ledit calculateur est un calculateur choisi parmi :
- un calculateur d'éclairage du véhicule,
- un calculateur d'avertisseur sonore,
- un calculateur des ouvrants du véhicule,
- un calculateur d'alarme du véhicule,
- un calculateur de détection d'obstacles ,
- un calculateur d'enregistrement vidéo,
- un calculateur d'avertissement de danger,
- un calculateur de géolocalisation du véhicule,
- un calculateur de freinage.

4. Méthode de surveillance selon l'une quelconque des revendications précédentes, le véhicule étant associé à un badge d'identification, la méthode de surveillance comprenant en outre une étape de détection de badge d'identification (20), ledit calculateur étant un calculateur des ouvrants du véhicule.

5. Méthode de surveillance selon la revendication 4, comprenant en outre une étape de reconnaissance d'un mouvement de l'objet mobile (21) parmi des mouvements prédéfinis.

6. Méthode de surveillance selon l'une quelconque des revendications précédentes, le véhicule automobile étant stationné sur une surface de stationnement définissant sensiblement un plan de stationnement, une optique de la caméra asynchrone étant orientée en direction du plan de stationnement.

7. Méthode de surveillance selon l'une quelconque des revendications précédentes, comprenant en outre une étape de mise en veille du calculateur (14) dans laquelle le système de surveillance met en veille ledit calculateur après l'écoulement d'une durée prédéterminée de réveil dudit calculateur ou d'une durée prédéterminée de non détection d'objet mobile dans l'environnement véhicule.

8. Méthode de surveillance selon l'une quelconque des revendications précédentes, le système de surveillance comprenant en outre une caméra synchrone, l'étape de détection de mouvement (11) comprenant les opérations suivantes :
- une opération de détection de mouvement (110) dans laquelle la caméra asynchrone détecte un mouvement dans l'environnement véhicule,
- une opération d'activation de la caméra synchrone (111),
- une opération de détermination (112) dans laquelle le système de surveillance détermine si un objet pertinent est mobile dans l'environnement véhicule, en fonction de données d'acquisition de la caméra synchrone et de la caméra asynchrone.

9. Produit programme d'ordinateur comprenant les instructions de programme mettant en oeuvre les étapes de la méthode de surveillance selon l'une quelconque des revendications 1 à 8, lorsque les instructions de programme sont exécutées par un système de surveillance d'un véhicule comprenant un moteur, un calculateur et ledit système de surveillance, ledit système du surveillance comportant une caméra asynchrone.

10. Support lisible d'informations sur lequel est mémorisé le produit programme d'ordinateur selon la revendication précédente.

## Patentansprüche

1. Verfahren zur Überwachung einer Umgebung eines geparkten Kraftfahrzeugs, wobei das Fahrzeug einen Motor, einen Rechner und ein Überwachungssystem, das eine Asynchronkamera umfasst, beinhaltet, wobei das Überwachungsverfahren die folgenden Schritte beinhaltet:
- einen Schritt des Detektierens eines geparkten Fahrzeugs (10), während dessen das Überwachungssystem detektiert, dass das Fahrzeug geparkt und der Motor abgeschaltet ist,
- einen Schritt des Detektierens einer Bewegung (11), während dessen das Überwachungssystem mittels Detektion einer Bewegung durch die Asynchronkamera detektiert, ob sich ein Objekt in der Fahrzeugumgebung bewegt,
- einen Schritt des Aufweckens des Rechners (12), während dessen das Überwachungssystem den Rechner aufweckt.

2. Überwachungsverfahren nach Anspruch 1, das ferner einen Warnschritt (13) beinhaltet, während dessen das Überwachungssystem mittels drahtloser Kommunikation ein Warnsignal an ein elektronisches Gerät sendet.

3. Überwachungsverfahren nach einem beliebigen der Ansprüche 1 oder 2, wobei der Rechner ein Rechner ist, der aus Folgenden ausgewählt ist:
- einem Rechner für die Beleuchtung des Fahrzeugs,
- einem Rechner für ein akustisches Signal,
- einem Rechner für die Öffnungselemente des Fahrzeugs,
- einem Rechner für einen Alarm des Fahrzeugs,
- einem Rechner zur Detektion von Hindernissen,
- einem Rechner zur Aufzeichnung von Videos,
- einem Rechner für ein Gefahrensignal,
- einem Rechner zur Ortsbestimmung des Fahrzeugs,
- einem Bremsrechner.

4. Überwachungsverfahren nach einem beliebigen der vorhergehenden Ansprüche, wobei das Fahrzeug mit einer Identifikationsmarke assoziiert ist, wobei das Überwachungsverfahren ferner einen Schritt des Detektierens einer Identifikationsmarke (20) beinhaltet, wobei der Rechner ein Rechner für die Öffnungselemente des Fahrzeugs ist.

5. Überwachungsverfahren nach Anspruch 4, das ferner einen Schritt des Wiedererkennens einer Bewegung des sich bewegenden Objekts (21) aus vordefinierten Bewegungen beinhaltet.

6. Überwachungsverfahren nach einem beliebigen der vorhergehenden Ansprüche, wobei das Kraftfahrzeug auf einer Parkfläche geparkt ist, die im Wesentlichen eine Parkebene definiert, wobei eine Optik der Asynchronkamera in Richtung der Parkebene ausgerichtet ist.

7. Überwachungsverfahren nach einem beliebigen der vorhergehenden Ansprüche, das ferner einen Schritt des Versetzens des Rechners (14) in den Standby beinhaltet, während dessen das Überwachungssystem den Rechner nach Ablauf einer vorbestimmten Aufweckdauer des Rechners oder einer vorbestimmten Dauer der Nichtdetektion eines beweglichen Objekts in der Fahrzeugumgebung in den Standby versetzt.

8. Überwachungsverfahren nach einem beliebigen der vorhergehenden Ansprüche, wobei das Überwachungssystem ferner eine Synchronkamera beinhaltet, wobei der Schritt des Detektierens einer Bewegung (11) die folgenden Vorgänge beinhaltet:
- einen Vorgang des Detektierens einer Bewegung (110), während dessen die Asynchronkamera eine Bewegung in der Fahrzeugumgebung detektiert,
- einen Vorgang des Aktivierens der Synchronkamera (111),
- einen Vorgang des Bestimmens (112), während dessen das Überwachungssystem in Abhängigkeit von Erfassungsdaten der Synchronkamera und der Asynchronkamera bestimmt, ob sich ein entsprechendes Objekt in der Fahrzeugumgebung bewegt.

9. Computerprogrammprodukt, das die Programmanweisungen beinhaltet, die die Schritte des Überwachungsverfahren nach einem beliebigen der Ansprüche 1 bis 8 umsetzen, wenn die Programmanweisungen von einem Überwachungssystem eines Fahrzeugs, das einen Motor, einen Rechner und das Überwachungssystem beinhaltet, ausgeführt werden, wobei das Überwachungssystem eine Asynchronkamera umfasst.

10. Lesbarer Informationsträger, auf dem das Computerprogrammprodukt nach dem vorhergehenden Anspruch gespeichert ist.

## Claims

1. A method for monitoring an environment of a parked motor vehicle, the vehicle comprising an engine, a computer and a monitoring system comprising an asynchronous camera, the monitoring method comprising the following steps:
- a parked vehicle detection step (10) wherein the monitoring system detects that the vehicle is parked, the engine being stopped,
- a motion detection step (11) wherein the monitoring system detects whether an object is moving in the vehicle environment by means of a motion detection by the asynchronous camera,
- a computer wake-up step (12) wherein the monitoring system wakes up said computer.

2. The monitoring method as claimed in claim 1, also comprising an alert step (13) wherein the monitoring system sends an alert signal to an electronic device by means of a wireless communication.

3. The monitoring method as claimed in either one of claims 1 and 2, wherein said computer is a computer chosen from:
- a vehicle lighting computer,
- a sound warning computer,
- a vehicle openings computer,
- a vehicle alarm computer,
- an obstacle detection computer,
- a video recording computer,
- a danger warning computer,
- a vehicle geolocation computer,
- a braking computer.

4. The monitoring method as claimed in any one of the preceding claims, the vehicle being associated with an identification badge, the monitoring method also comprising an identification badge detection step (20), said computer being a vehicle openings computer.

5. The monitoring method as claimed in claim 4, also comprising a step of recognition of a motion of the moving object (21) from among predefined movements.

6. The monitoring method as claimed in any one of the preceding claims, the motor vehicle being parked on a parking surface substantially defining a parking plane, an optic of the asynchronous camera being oriented toward the parking plane.

7. The monitoring method as claimed in any one of the preceding claims, also comprising a step of placing the computer on standby (14), wherein the monitoring system places said computer on standby after a predetermined wake-up time of said computer or a predetermined time of non-detection of a moving object in the vehicle environment has elapsed.

8. The monitoring method as claimed in any one of the preceding claims, the monitoring system also comprising a synchronous camera, the motion detection step (11) comprising the following operations:
- a motion detection operation (110) wherein the asynchronous camera detects a motion in the vehicle environment,
- a synchronous camera activation operation (111),
- a determination operation (112) wherein the monitoring system determines whether a relevant object is moving in the vehicle environment, as a function of acquisition data from the synchronous camera and from the asynchronous camera.

9. A computer program product comprising program instructions implementing the steps of the monitoring method as claimed in any one of claims 1 to 8, when the program instructions are executed by a monitoring system of a vehicle comprising an engine, a computer and said monitoring system, said monitoring system comprising an asynchronous camera.

10. A readable information medium on which is stored the computer program product as claimed in the preceding claims.
